# FASCICULE DE BREVET EUROPEEN

(11) **EP 4 110 667 B1**
(45) Date de publication et mention de la délivrance du brevet: **25.10.2023**
(21) Numéro de dépôt: 21706335.3
(22) Date de dépôt: 24.02.2021
(51) Int. Cl.: B60T 17/22, F16D 65/00

(54) **LIMITATION DE FONCTIONNEMENT D'UNE MACHINE PAR UN SYSTÈME DE CAPTATION DE PARTICULES DE FREINAGE**
BETRIEBSEINSCHRÄNKUNG EINER MASCHINE DURCH EIN SYSTEM ZUR ERFASSUNG VON BREMSPARTIKELN
LIMITATION OF A MACHINE OPERATION BY A SYSTEM FOR CAPTURING BRAKING PARTICLES

(30) Priorité: 28.02.2020 FR 2002025
(43) Date de publication de la demande: 04.01.2023
(73) Titulaire: Tallano Technologies, 75015 Paris (FR)
(72) Inventeur: ADAMCZAK, Loic, 92100 BOULOGNE BILLANCOURT (FR); ROCCA-SERRA, Christophe, 75016 PARIS (FR)
(74) Mandataire: Plasseraud IP
(86) Numéro de dépôt international: PCT/EP2021/054611
(87) Numéro de publication internationale: WO 2021/170681

(56) Documents cités:
- WO-A1-2019/224034
- FR-A1- 3 057 040
- FR-A1- 3 081 781
- GB-A- 2 538 735
- US-A1- 2014 262 633

## Description

La présente invention concerne un système de captation des particules de freinage d'un système de freinage à friction d'une machine, qui comporte une source de dépression, un circuit pneumatique qui relie le système de freinage à friction à la source de dépression, et un filtre situé sur le circuit pneumatique et monté sur un support.

De tels systèmes de freinage à friction (voir par exemple le système décrit dans le document FR 3 057 040 A1) peuvent équiper des véhicules routiers ou ferroviaires. De tels systèmes de freinage à friction peuvent aussi équiper des appareils stationnaires à rotor comme des éoliennes ou des appareils industriels.

Dans de tels systèmes il est prévu une source de dépression (par exemple une turbine d'aspiration entrainée par un moteur) qui est reliée par un circuit pneumatique au système de freinage à friction, et un filtre de collecte des particules qui sont émises par le système de freinage. Ce filtre est placé en amont de la source de dépression, et empêche un passage des particules au travers de la source de dépression et leur diffusion dans l'atmosphère. Cependant, dans certaines situations, ce filtre est colmaté au-delà d'un seuil acceptable prédéfini, ou alors le système de détection du colmatage du filtre ne fonctionne pas, par exemple parce qu'il est débranché, volontairement ou involontairement. Le fonctionnement de la machine est inefficace dans ces situations.

### Description de l'invention

La présente invention vise à remédier à ces inconvénients.

L'invention vise à proposer un système de captation de particules de freinage qui permette de limiter le fonctionnement du véhicule, ou de l'appareil stationnaire, lorsque le filtre est colmaté ou que le système de détection du colmatage du filtre ne fonctionne pas.

Ce but est atteint grâce au fait que le système de captation comporte une unité de commande, un dispositif de commande de la machine, et un dispositif de détection du colmatage du filtre qui est apte à envoyer au moins un signal à l'unité de commande lorsque le filtre est colmaté, l'unité de commande étant apte à déterminer, sur la base de ce signal, le colmatage du filtre, et étant apte à déterminer si le dispositif de détection est inopérant, l'unité de commande étant apte à activer le dispositif de commande pour limiter le fonctionnement de la machine lorsque le filtre est colmaté ou lorsque le dispositif de détection est inopérant, et étant apte à informer un utilisateur du colmatage du filtre.

Grâce à ces dispositions, un colmatage du filtre sur le circuit pneumatique est détecté et déterminé, et dans ce cas le fonctionnement de la machine est limité. De plus, l'unité de commande est apte à déterminer si le dispositif de détection du colmatage est inopérant, et à limiter le fonctionnement de la machine dans ce cas également.

Avantageusement l'utilisateur est informé par l'unité de commande du colmatage du filtre, ou du défaut d'opération du dispositif de détection.

Avantageusement le dispositif de détection comporte un capteur de pression qui est situé sur le circuit pneumatique en amont du filtre, le dispositif de détection étant apte à envoyer à l'unité de commande dans un signal une mesure de la pression P₁ dans le circuit pneumatique en amont du filtre, l'unité de commande, à réception de ce signal, étant apte à comparer la pression mesurée P₁ avec une pression de référence P_{R} qui est la pression dans le circuit pneumatique pour un seuil déterminé de colmatage du filtre pour l'état de fonctionnement de référence E_{R} de la source de dépression lors de la mesure de pression P₁ par le capteur de pression, l'unité de commande étant apte à limiter le fonctionnement de la machine lorsque la pression mesurée P₁ est sensiblement égale ou supérieure à la pression de référence P_{R}.

Ainsi, le colmatage du filtre est déterminé de façon fiable.

En variante, le dispositif de détection comporte un premier capteur de pression qui est situé sur le circuit pneumatique en amont du filtre, le dispositif de détection étant apte à envoyer à l'unité de commande dans un signal une mesure de la première pression P₁ dans le circuit pneumatique en amont du filtre, et un second capteur de pression qui est situé sur le circuit pneumatique en aval du filtre, le dispositif de détection étant apte à envoyer à l'unité de commande dans un signal une mesure de la seconde pression P₂ dans le circuit pneumatique en aval du filtre, l'unité de commande, à réception du au moins un signal, étant apte à comparer la première pression mesurée P₁ et la seconde pression mesurée P₂, l'unité de commande étant apte à limiter le fonctionnement de la machine lorsque la différence (P₁ - P₂) entre la première pression mesurée P₁ et la seconde pression mesurée P₂ est sensiblement égale ou supérieure à une différence de pression seuil ΔP qui correspond à un seuil déterminé de colmatage du filtre.

Ainsi, le colmatage du filtre est déterminé de façon fiable.

L'invention concerne également une machine comportant un système de captation selon l'invention.

L'invention concerne également un procédé de détection du colmatage d'un filtre dans un système de captation des particules de freinage d'un système de freinage à friction d'une machine, ce système de captation comportant une source de dépression, un circuit pneumatique qui relie le système de freinage à friction à la source de dépression, un filtre situé sur le circuit pneumatique et monté sur un support.

Selon l'invention, le procédé comprend les étapes suivantes
(a) On fournit une unité de commande, un dispositif de commande de la machine, et un dispositif de détection du colmatage du filtre qui font partie du système de captation ;
(b) L'unité de commande détermine si le dispositif de détection est inopérant ;
(c) Le dispositif de détection envoie au moins un signal à l'unité de commande lorsque le filtre est colmaté, si le dispositif de détection est opérationnel ;
(d) L'unité de commande détermine sur la base du signal si le filtre est colmaté ;
(e) L'unité de commande active le dispositif de commande pour limiter le fonctionnement de la machine lorsque le filtre est colmaté ou lorsque le dispositif de détection est inopérant.

Avantageusement, le procédé comporte en outre l'étape suivante :
(f) L'unité de commande informe un utilisateur du colmatage du filtre ou du défaut d'opération du dispositif de détection.

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
[Fig. 1] La figure 1 est une vue schématique d'un système de captation selon l'invention,
[Fig. 2] La figure 2 est une vue en perspective d'un boitier portant un filtre, et d'un dispositif de détection du colmatage de ce filtre dans le système de captation de la figure 1,
[Fig. 3] La figure 3 est une vue en perspective d'un boitier portant un filtre, et d'une variante d'un dispositif de détection du colmatage de ce filtre dans le système de captation de la figure 1.

### Description détaillée de l'invention

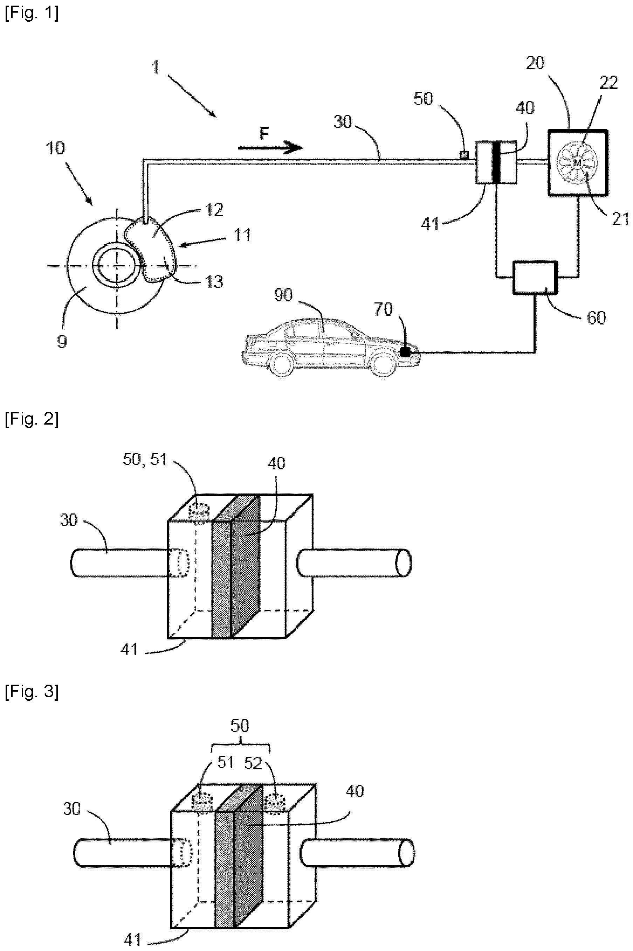

La figure 1 montre schématiquement un système de captation 1 de particules selon l'invention, ces particules étant émises par un système de freinage à friction 10.

Ce système de freinage à friction 10 comporte une plaquette de frein 11 pour le freinage d'une machine 90. Cette machine est soit un véhicule, soit un appareil stationnaire. Cette plaquette 11 comprend une semelle 12 et une garniture 13 réalisée en matériau de friction fixée sur la semelle 12. Sur la figure 1, la plaquette 10 est vue par-dessous, la semelle 1 étant au premier plan.

La plaquette 11 (première plaquette) est en regard d'un disque 9 qui est entrainé en rotation par la machine 90, par exemple par la roue du véhicule lorsque cette machine est un véhicule. Une seconde plaquette (non-visible) identique est située de l'autre côté du disque 9 et en regard de la première plaquette 11 de telle sorte que ces deux plaquettes prennent en sandwich le disque 9. Le freinage du disque 9 est réalisé par friction des deux garnitures (13) contre le disque 9 lorsque ces deux plaquettes se rapprochent du disque 9.

Le système de captation 1 comprend un circuit pneumatique 30 et une source de dépression 20. La plaquette 11 et la seconde plaquette sont reliées à la source de dépression 20 via ce circuit pneumatique 30. Par exemple la source de dépression 20 comporte un moteur électrique 21 et une turbine d'aspiration 22 qui est entrainée par ce moteur électrique 21.

En fonctionnement la source de dépression 20 est apte à aspirer les particules depuis leur émission par les garnitures (13) et au travers du circuit pneumatique 30. Le sens de circulation de l'air et des particules en fonctionnement normal est indiqué par la flèche F sur la figure 1. La flèche F indique donc une circulation de l'amont vers l'aval. Le système de captation 1 comprend en outre un filtre 40 qui est situé sur le circuit 30, c'est-à-dire qu'il est traversé par l'air qui circule dans le circuit 30. Ce filtre 40 est monté sur un support 41 qui est fixé sur le conduit 30. Par exemple le support 41 est un boitier dans lequel est logé le filtre 40, comme représenté sur les figures. Ainsi le filtre 40 sépare le boitier 41 en une partie amont et une partie aval. L'air provenant de la partie amont du circuit 30 entre dans le boitier 41 à l'extrémité amont du boitier 41, traverse le filtre 40, et sort du boitier 41 à l'extrémité aval du boitier 41 pour entrer dans la partie aval du circuit 30.

Le système de captation 1 comporte en outre une unité de commande 60, un dispositif de commande 70 de la machine 90, et un dispositif de détection 50 du filtre 40. Cette unité de commande 60 et ce dispositif de détection 50 servent à déterminer un colmatage du filtre 40 au-delà d'un certain seuil de colmatage. L'unité de commande 60 reçoit des signaux du dispositif de détection 50 (qui comporte un élément pour générer et envoyer ces signaux), et est également apte à commander la source de dépression 20 et en recevoir des informations, et à commander le dispositif de commande 70 de la machine 90. Ces interactions entre l'unité de commande 60, le dispositif de commande 70, le dispositif de détection 50, et la source de dépression 20 sont représentés schématiquement sur la figure 1 par des lignes continues. Ces interactions peuvent être réalisées par des lignes électriques. Le fonctionnement de cette unité de commande 60, du dispositif de commande 70, et de ce dispositif de détection 50 est décrit ci-dessous.

En fonctionnement du système de captation 1, le dispositif de détection 50 envoie au moins un signal à l'unité de commande 60, si ce dispositif de détection 50 est opérationnel. Par « au moins un signal », on entend l'émission soit d'un signal en continu, soit d'un signal à intervalles réguliers. Ce signal contient une information, directe ou indirecte, concernant le colmatage du filtre 40, c'est-à-dire un niveau de colmatage effectif du filtre 40. On considère que le colmatage du filtre 40 est effectif lorsque le filtre 40 est colmaté au-delà d'un certain seuil de colmatage, ce seuil étant prédéfini. L'unité de commande 60 détermine un colmatage du filtre 40 sur la base de ce signal, en comparant le niveau de colmatage effectif du filtre 40 et le seuil de colmatage prédéfini.

Il est possible également que le dispositif de détection 50 soit inopérant (défaut d'opération). Cela est le cas par exemple parce qu'il est défectueux, ou parce qu'il est débranché, volontairement ou involontairement. Dans cette situation, le dispositif de détection 50 n'est pas apte à détecter le colmatage du filtre 40, et n'est pas apte à envoyer un signal à l'unité de commande 60. Cette absence d'envoi du signal se concrétise soit par une interruption du signal lorsque ce signal est continu, soit par une absence d'envoi du signal à un moment où il aurait dû être envoyé, lorsque ce signal est périodique. Ainsi, le défaut d'opération du dispositif de détection 50 est déterminé par l'unité de commande 60 par le fait que l'unité de commande 60 ne reçoit plus de signal du dispositif de détection 50.

Dans les deux cas ci-dessus (cas du colmatage du filtre 40 au-delà d'un certain seuil de colmatage, et cas d'un dispositif de détection 50 inopérant), l'unité de commande active le dispositif de commande 70 de la machine 90 pour limiter le fonctionnement de la machine 90, par exemple limiter la vitesse de rotation d'un disque sur lequel est monté le système de freinage à friction 10. Dans le cas où la machine 90 est un véhicule, cette limitation est une limitation de la vitesse de déplacement du véhicule. Si la machine 90 est à l'arrêt, cette limitation du fonctionnement peut être une prévention du démarrage de la machine 90. Dans le cas où la machine 90 est un véhicule, le véhicule reste alors immobile.

Selon un mode de réalisation, l'unité de commande 60 informe un utilisateur du colmatage du filtre 40 (ou du défaut d'opération du dispositif de commande 70). Cette information peut se faire par tout moyen, par exemple par affichage sur le tableau de bord du véhicule d'un texte tel que « Filtre colmaté », « Détection du filtre inopérante », ou d'un logo ou d'un voyant lumineux, et/ou par exemple par stimulation de l'utilisateur par des vibrations au moyen d'un système vibratoire situé dans le siège et commandé par l'unité de commande 60.

On décrit ci-dessous un mode de réalisation du dispositif de détection 50 du filtre 40, en référence à la figure 2. La figure 2 est une vue plus détaillée du support 41, du filtre 40, et du dispositif de détection 50.

Le dispositif de détection 50 comporte un (premier) capteur de pression 51 qui est situé sur le circuit pneumatique 30, en amont du filtre 40. Idéalement, le capteur de pression 51 est situé suffisamment proche du filtre 40 pour que la pression mesurée par le capteur de pression 51 soit identique à la pression à l'endroit où le filtre 40 se trouve, ou devrait se trouver s'il était présent. Ainsi, le capteur de pression 51 est situé soit sur le circuit pneumatique 30 proche du support 41 du filtre 40, soit dans le support 41 du filtre 40 comme représenté en figure 2. Par « situé dans le support 41 », on signifie que le capteur de pression est situé sur le support, ou dans le support si ce support est un boitier, et dans tous les cas que ce capteur mesure la pression à l'endroit de ce support 41.

Le capteur de pression 51 est apte à mesurer la (première) pression P₁ dans le circuit pneumatique 30 en amont du filtre 40, et le dispositif de détection 50 est apte à envoyer à l'unité de commande 60 cette mesure dans un signal. Pendant cette mesure, la source de dépression 20 fonctionne selon un état de fonctionnement appelé état de fonctionnement de référence E_{R}. Cet état de fonctionnement est caractérisé par un paramètre qui est par exemple la vitesse de rotation V de la turbine d'aspiration 22. Ainsi, dans l'état de fonctionnement de référence E_{R}, la turbine d'aspiration 22 tourne à une vitesse de rotation V_{R}. L'unité de commande 60 comporte en mémoire une pression de référence P_{R} qui est la pression qui est générée dans le circuit pneumatique 30 pour un seuil déterminé de colmatage du filtre 40 pour l'état de fonctionnement de référence E_{R} de la source de dépression 20. On comprend que cette pression de référence P_{R} varie en fonction de cet état de fonctionnement de référence E_{R}. Ainsi, la pression de référence P_{R} varie en fonction de la vitesse de rotation V_{R} de la turbine 22. L'unité de commande 60, à réception du signal comportant la pression P₁ mesurée dans le circuit pneumatique 30, compare cette pression mesurée P₁ avec la pression de référence P_{R}. Cette pression de référence P_{R} correspond à la pression dans le circuit pneumatique 30 pour un seuil déterminé de colmatage du filtre 40 pour l'état de fonctionnement de référence E_{R} de la source de dépression 20, et la mesure de la première pression P₁ par le capteur de pression 51 est effectuée durant cet état de fonctionnement de référence E_{R}. En conséquence, si la première pression P₁ est sensiblement égale, ou est supérieure, à la pression de référence P_{R}, cela signifie que le filtre 40 est colmaté au-dessus du seuil de colmatage. Par « sensiblement égale », on signifie que la pression se situe dans un intervalle réduit autour de la pression de référence. Par exemple cet intervalle est de +/- 1%, ou +/- 2%, ou +/- 5%, ou +/- 10% de la valeur de la pression de référence. Ainsi, dans la situation où P₁ est sensiblement égale, ou est supérieure, à P_{R}, l'unité de commande 60 limite le fonctionnement de la machine 90.

On décrit ci-dessous une variante de ce mode de réalisation, dans laquelle le dispositif de détection 50 comporte, en plus du premier capteur de pression 51, un second capteur de pression 52. Cette variante est illustrée en figure 3. Le premier capteur de pression 51 est situé en amont du filtre 40, sur le circuit 30. Le second capteur de pression 52 est situé en aval du filtre 40, sur le circuit 30. Par exemple, le premier capteur 51 et le second capteur 52 sont situés dans le support 41, comme illustré en figure 3. Le premier capteur de pression 51 est apte à mesurer une première pression P₁ dans le circuit pneumatique 30 en amont du filtre 40, et le dispositif de détection 50 est apte à envoyer à l'unité de commande 60 cette mesure dans un signal. En parallèle, par exemple simultanément, le second capteur de pression 52 est apte à mesurer une seconde pression P₂ dans le circuit pneumatique 30 en aval du filtre 40, et le dispositif de détection 50 est apte à envoyer à l'unité de commande 60 cette mesure dans un signal. Par exemple la mesure de la première pression P₁ et la mesure de la seconde pression P₂ sont envoyées dans le même signal. L'unité de commande 60, à réception de ce ou de ces signaux, est apte à comparer la première pression P₁ avec la seconde pression P₂. Si la différence (P₁ - P₂) entre la première pression mesurée P₁ et la seconde pression mesurée P₂ est sensiblement égale, ou est supérieure, à une différence de pression seuil ΔP, cela signifie que le filtre 40 est colmaté au-dessus du seuil de colmatage. L'unité de commande 60 comporte en mémoire cette différence de pression seuil ΔP, qui est valable pour l'état de fonctionnement de la source de dépression 20 lors des mesures de la première pression P₁ et de la seconde pression P₂. Ainsi, dans la situation où (P₁ - P₂) est sensiblement égale ou supérieure à ΔP, l'unité de commande 60 limite le fonctionnement de la machine 90.

Le mode de réalisation et sa variante ci-dessus peuvent être combinés. Ainsi, l'unité de commande est apte à la fois à comparer (P₁ - P₂) avec ΔP et à comparer P₁ avec P_{R}.

L'invention concerne également une machine comportant un système de captation 1 tel que décrit ci-dessus.

L'invention concerne également un procédé de détection du colmatage d'un filtre 40 dans un système de captation 1 des particules de freinage d'un système de freinage à friction 10 d'une machine 90. Comme décrit ci-dessus, ce système de captation 1 comporte une source de dépression 20, un circuit pneumatique 30 qui relie le système de freinage à friction 10 à la source de dépression 20, un filtre 40 qui est situé sur le circuit pneumatique 30 et qui est monté sur un support 41. Le procédé comporte les étapes suivantes :
(a) On fournit une unité de commande 60, un dispositif de commande 70 de la machine 90, et un dispositif de détection 50 du filtre 40 qui font partie du système de captation 1 ;
(b) L'unité de commande 60 détermine si le dispositif de détection 50 est inopérant ;
(c) Le dispositif de détection 50 envoie au moins un signal à l'unité de commande 60 lorsque le filtre 40 est colmaté, si le dispositif de détection 50 est opérationnel ;
(d) L'unité de commande 60 détermine sur la base du signal si le filtre 40 est colmaté ;
(e) L'unité de commande 60 active le dispositif de commande 70 pour limiter le fonctionnement de la machine 90 lorsque le filtre 40 est colmaté ou lorsque le dispositif de détection 50 est inopérant.

En supplément le procédé comporte l'étape (f) ci-dessous, qui précède ou suit immédiatement l'étape (e) :
(f) L'unité de commande 60 informe un utilisateur du colmatage du filtre 40 ou du défaut d'opération du dispositif de détection 50.

## Revendications

1. Système de captation (1) des particules de freinage d'un système de freinage à friction (10) d'une machine (90), qui comporte une source de dépression (20), un circuit pneumatique (30) qui relie ledit système de freinage à friction (10) à ladite source de dépression (20), un filtre (40) situé sur ledit circuit pneumatique (30) et monté sur un support (41), ledit système de captation (1) comportant une unité de commande (60) et un dispositif de commande (70) de ladite machine (90), **caractérisé en ce que** ledit système de captation comprend aussi un dispositif de détection (50) du colmatage dudit filtre (40) qui est apte à envoyer au moins un signal à ladite unité de commande (60) lorsque le filtre (40) est colmaté, ladite unité de commande (60) étant apte à déterminer sur la base de ce signal le colmatage dudit filtre (40), et étant apte à déterminer si ledit dispositif de détection (50) est inopérant, ladite unité de commande (60) étant apte à activer ledit dispositif de commande (70) pour limiter le fonctionnement de la machine (90) lorsque ledit filtre (40) est colmaté ou lorsque ledit dispositif de détection (50) est inopérant.

2. Système de captation (1) selon la revendication 1 dans lequel l'unité de commande (60) est apte à informer un utilisateur du colmatage du filtre (40) ou du défaut d'opération du dispositif de détection (50).

3. Système de captation (1) selon la revendication 1 ou 2 dans lequel ledit dispositif de détection (50) comporte un capteur de pression (51) qui est situé sur ledit circuit pneumatique (30) en amont dudit filtre (40), ledit dispositif de détection (50) étant apte à envoyer à ladite unité de commande (60) dans un signal une mesure de la pression P₁ dans ledit circuit pneumatique (30) en amont dudit filtre (40), ladite unité de commande (60), à réception dudit signal, étant apte à comparer ladite pression mesurée P₁ avec une pression de référence P_{R} qui est la pression dans ledit circuit pneumatique (30) pour un seuil déterminé de colmatage dudit filtre (40) pour l'état de fonctionnement de référence E_{R} de ladite source de dépression (20) lors de ladite mesure de pression P₁ par ledit capteur de pression (51), ladite unité de commande (60) étant apte à limiter le fonctionnement de la machine (90) lorsque ladite pression mesurée P₁ est sensiblement égale ou supérieure à ladite pression de référence P_{R}.

4. Système de captation (1) selon la revendication 1 ou 2 dans lequel ledit dispositif de détection (50) comporte un premier capteur de pression (51) qui est situé sur ledit circuit pneumatique (30) en amont dudit filtre (40), ledit dispositif de détection (50) étant apte à envoyer à ladite unité de commande (60) dans un signal une mesure de la première pression P₁ dans ledit circuit pneumatique (30) en amont dudit filtre (40), et un second capteur de pression (52) qui est situé sur ledit circuit pneumatique (30) en aval dudit filtre (40), ledit dispositif de détection (50) étant apte à envoyer à ladite unité de commande (60) dans un signal une mesure de la seconde pression P₂ dans ledit circuit pneumatique (30) en aval dudit filtre (40), ladite unité de commande (60), à réception dudit au moins un signal, étant apte à comparer ladite première pression mesurée P₁ et ladite seconde pression mesurée P₂, ladite unité de commande (60) étant apte à limiter le fonctionnement de la machine (90) lorsque la différence (P₁ - P₂) entre ladite première pression mesurée P₁ et ladite seconde pression mesurée P₂ est sensiblement égale ou supérieure à une différence de pression seuil ΔP qui correspond à un seuil déterminé de colmatage dudit filtre (40).

5. Machine (90) comportant un système de captation (1) selon l'une quelconque des revendications précédentes.

6. Procédé de détection du colmatage d'un filtre (40) dans un système de captation (1) des particules de freinage d'un système de freinage à friction (10) d'une machine (90), ce système de captation (1) comportant une source de dépression (20), un circuit pneumatique (30) qui relie ledit système de freinage à friction (10) à ladite source de dépression (20), un filtre (40) situé sur ledit circuit pneumatique (30) et monté sur un support (41), ledit procédé étant **caractérisé en ce qu'**il comporte les étapes suivantes :
(a) On fournit une unité de commande (60), un dispositif de commande (70) de ladite machine (90), et un dispositif de détection (50) du colmatage dudit filtre (40) qui font partie dudit système de captation (1) ;
(b) Ladite unité de commande (60) détermine si ledit dispositif de détection (50) est inopérant ;
(c) Ledit dispositif de détection (50) envoie au moins un signal à ladite unité de commande 60 lorsque le filtre 40 est colmaté, si le dispositif de détection (50) est opérationnel ;
(d) Ladite unité de commande (60) détermine sur la base dudit signal si ledit filtre (40) est colmaté ;
(e) Ladite unité de commande (60) active ledit dispositif de commande (70) pour limiter le fonctionnement de la machine (90) lorsque ledit filtre (40) est colmaté ou lorsque ledit dispositif de détection (50) est inopérant.

7. Procédé de détection selon la revendication 6, qui comporte en outre l'étape suivante :
(f) Ladite unité de commande (60) informe un utilisateur du colmatage du filtre (40) ou du défaut d'opération du dispositif de détection (50).

## Patentansprüche

1. System (1) zum Auffangen von Bremspartikeln eines Reibungsbremssystems (10) einer Maschine (90), das eine Unterdruckquelle (20), einen pneumatischen Kreislauf (30), der das Reibungsbremssystem (10) mit der Unterdruckquelle (20) verbindet, und einen Filter (40) umfasst, der sich in dem Druckluftkreis (30) befindet und auf einem Träger (41) angebracht ist, wobei das Auffangsystem (1), eine Steuereinheit (60) und eine Steuervorrichtung (70) für die Maschine (90) umfasst, **dadurch gekennzeichnet, dass** das Auffangsystem auch eine Vorrichtung (50) zur Erfassung der Verstopfung des Filters (40) umfasst, die dazu geeignet ist, wenigstens ein Signal an die Steuereinheit (60) zu senden, wenn der Filter (40) verstopft ist, wobei die Steuereinheit (60) dazu geeignet ist, auf der Grundlage dieses Signals die Verstopfung des Filters (40) zu bestimmen, und dazu geeignet ist, zu bestimmen, ob die Erfassungsvorrichtung (50) außer Betrieb ist, wobei die Steuereinheit (60) dazu geeignet ist, die Steuervorrichtung (70) zu aktivieren, um den Betrieb der Maschine (90) zu beschränken, wenn der Filter (40) verstopft ist oder die Erfassungsvorrichtung (50) außer Betrieb ist.

2. Auffangsystem (1) nach Anspruch 1, wobei die Steuereinheit (60) dazu geeignet ist, einen Benutzer über die Verstopfung des Filters (40) oder die Fehlfunktion der Erfassungsvorrichtung (50) zu informieren.

3. Auffangsystem (1) nach Anspruch 1 oder 2, wobei die Erfassungsvorrichtung (50) einen Drucksensor (51) umfasst, der sich an dem pneumatischen Kreislauf (30) stromaufwärts des Filters (40) befindet, wobei die Erfassungsvorrichtung (50) dazu geeignet ist, der Steuereinheit (60) mit einem Signal eine Messung des Drucks P₁ in dem pneumatischen Kreislauf (30) stromaufwärts des Filters (40) zu senden, wobei die Steuereinheit (60) dazu geeignet ist, bei Empfang des Signals den gemessenen Druck P₁ mit einem Referenzdruck P_{R} zu vergleichen, der der Druck in dem pneumatischen Kreislauf (30) für einen bestimmten Verstopfungsschwellenwert des Filters (40) für den Referenzbetriebszustand E_{R} der Druckquelle (20) bei der Messung des Drucks P₁ durch den Drucksensor (51) ist, wobei die Steuereinheit (60) dazu geeignet ist, den Betrieb der Maschine (90) zu begrenzen, wenn der gemessene Druck P₁ im Wesentlichen gleich oder größer als der Referenzdruck P_{R} ist.

4. Auffangsystem (1) nach Anspruch 1 oder 2, wobei die Erfassungsvorrichtung (50) einen ersten Drucksensor (51) umfasst, der sich in dem pneumatischen Kreislauf (30) stromaufwärts des Filters (40) befindet, wobei die Erfassungsvorrichtung (50) dazu geeignet ist, der Steuereinheit (60) mit einem Signal eine Messung des ersten Drucks P₁ in dem pneumatischen Kreislauf (30) stromaufwärts des Filters (40) zu senden, und einen zweiten Drucksensor (52), der sich an dem pneumatischen Kreislauf (30) stromabwärts des Filters (40) befindet, wobei die Erfassungsvorrichtung (50) dazu geeignet ist, der Steuereinheit (60) mit einem Signal eine Messung des zweiten Drucks P₂ in dem pneumatischen Kreislauf (30) stromabwärts des Filters (40) zu senden, wobei die Steuereinheit (60) bei Empfang des wenigstens einen Signals dazu geeignet ist, den ersten gemessenen Druck P₁ und den zweiten gemessenen Druck P₂ zu vergleichen, wobei die Steuereinheit (60) dazu geeignet ist, den Betrieb der Maschine (90) zu begrenzen, wenn die Differenz (P₁ - P₂) zwischen dem ersten gemessenen Druck P₁ und dem zweiten gemessenen Druck P₂ im Wesentlichen gleich oder größer als eine Schwellendruckdifferenz ΔP ist, die einem bestimmten Verstopfungsschwellenwert des Filters (40) entspricht.

5. Maschine (90), umfassend ein Auffangsystem (1) nach einem der vorhergehenden Ansprüche.

6. Verfahren zum Erfassen der Verstopfung eines Filters (40) in einem System (1) zum Auffangen von Bremspartikeln eines Reibungsbremssystems (10) einer Maschine (90), wobei dieses Auffangsystem (1) eine Unterdruckquelle (20) umfasst, einem pneumatischen Kreislauf (30), die das Reibungsbremssystem (10) mit der Unterdruckquelle (20) verbindet, einen Filter (40), der sich in dem pneumatischen Kreislauf (30) befindet und auf einem Träger (41) angebracht ist, wobei das Verfahren **dadurch gekennzeichnet ist, dass** es die folgenden Schritte umfasst:
(a) Bereitstellen einer Steuereinheit (60), einer Steuervorrichtung (70) für die Maschine (90) und einer Vorrichtung (50) zur Erfassung der Verstopfung des Filters (40), die ein Teil des Auffangsystems (1) sind;
(b) Die Steuereinheit (60) bestimmt, ob die Erfassungsvorrichtung (50) außer Betrieb ist;
(c) Die Erfassungsvorrichtung (50) sendet wenigstens ein Signal an die Steuereinheit (60), wenn der Filter (40) verstopft ist, wenn die Erfassungsvorrichtung (50) betriebsbereit ist;
(d) Die Steuereinheit (60) bestimmt auf der Grundlage des Signals, ob der Filter (40) verstopft ist;
(e) Die Steuereinheit (60) aktiviert die Steuervorrichtung (70), um den Betrieb der Maschine (90) zu begrenzen, wenn der Filter (40) verstopft ist oder wenn die Erfassungsvorrichtung (50) außer Betrieb ist.

7. Erfassungsverfahren nach Anspruch 6, welches ferner den folgenden Schritt umfasst:
(f) Die Steuereinheit (60) informiert einen Benutzer über die Verstopfung des Filters (40) oder die Fehlfunktion der Erfassungsvorrichtung (50).

## Claims

1. System (1) for capturing braking particles from a friction brake system (10) of a machine (90), which comprises a vacuum source (20), a pneumatic circuit (30) which connects said friction brake system (10) to said vacuum source (20), a filter (40) located on said pneumatic circuit (30) and mounted on a support (41), said capturing system (1) comprising a control unit (60), and a control device (70) for said machine (90), **characterized in that** said capturing system further comprises a clogging detection device (50) for said filter (40) which is capable of sending at least one signal to said control unit (60) when the filter (40) is clogged, said control unit (60) being capable of determining the clogging of said filter (40), on the basis of this signal, and being capable of determining whether said detection device (50) is inoperative, said control unit (60) being capable of activating said control device (70) to limit the operation of the machine (90) when said filter (40) is clogged or when said detection device (50) is inoperative.

2. Capturing system (1) according to claim 1, wherein the control unit (60) is capable of informing a user of the clogging of the filter (40) or of the malfunction of the detection device (50).

3. Capturing system (1) according to claim 1 or 2, wherein said detection device (50) comprises a pressure sensor (51) which is located on said pneumatic circuit (30) upstream of said filter (40), said detection device (50) being capable of sending in a signal to said control unit (60) a measurement of the pressure P₁ in said pneumatic circuit (30) upstream of said filter (40), said control unit (60), upon receiving said signal, being capable of comparing said measured pressure P₁ with a reference pressure P_{R} which is the pressure in said pneumatic circuit (30) for a determined clogging threshold of said filter (40) for the reference operating state E_{R} of said vacuum source (20) during said measurement of pressure P₁ by said pressure sensor (51), said control unit (60) being capable of limiting the operation of the machine (90) when said measured pressure P₁ is substantially equal to or greater than said reference pressure P_{R}.

4. Capturing system (1) according to claim 1 or 2, wherein said detection device (50) comprises a first pressure sensor (51) which is located on said pneumatic circuit (30) upstream of said filter (40), said detection device (50) being capable of sending in a signal to said control unit (60) a measurement of the first pressure P₁ in said pneumatic circuit (30) upstream of said filter (40), and a second sensor pressure (52) which is located on said pneumatic circuit (30) downstream of said filter (40), said detection device (50) being capable of sending in a signal to said control unit (60) a measurement of the second pressure P₂ in said pneumatic circuit (30) downstream of said filter (40), said control unit (60), upon receiving said at least one signal, being capable of comparing said first measured pressure P₁ and said second measured pressure P₂, said control unit (60) being capable of limiting the operation of the machine (90) when the difference (P₁ - P₂) between said first measured pressure P₁ and said second measured pressure P₂ is substantially equal to or greater than a threshold pressure difference ΔP which corresponds to a determined clogging threshold of said filter (40).

5. Machine (90) comprising a capturing system (1) according to any one of the preceding claims.

6. Method for detecting the clogging of a filter (40) in a system (1) for capturing braking particles from a friction brake system (10) of a machine (90), this capturing system (1) comprising a vacuum source (20), a pneumatic circuit (30) which connects said friction brake system (10) to said vacuum source (20), and a filter (40) located on said pneumatic circuit (30) and mounted on a support (41), said method being **characterized in that** it comprises the following steps:
(a) A control unit (60), a control device (70) for said machine (90), and a clogging detection device (50) for said filter (40) are provided, which are part of said capturing system (1);
(b) Said control unit (60) determines if said detection device (50) is inoperative;
(c) Said detection device (50) sends at least one signal to said control unit 60 when the filter 40 is clogged, if the detection device (50) is operational;
(d) Said control unit (60) determines whether said filter (40) is clogged, on the basis of said signal;
(e) Said control unit (60) activates said control device (70) to limit the operation of the machine (90) when said filter (40) is clogged or when said detection device (50) is inoperative.

7. Detection method according to claim 6, further comprising the following step:
(f) Said control unit (60) notifies a user of the clogging of the filter (40) or of the malfunction of the detection device (50).
